# EUROPEAN PATENT APPLICATION

(11) **EP 4 454 894 A1**
(43) Date of publication of application: **30.10.2024**
(21) Application number: 22911215.6
(22) Date of filing: 20.12.2022
(51) Int. Cl.: B41M 3/14, B32B 27/12, B32B 27/18, B41M 1/26, B41M 5/00, C09D 11/322, C09D 11/50, D06B 11/00

(54) **PRINTED FABRIC FOR ASSESSING AUTHENTICITY, AND METHOD FOR PRODUCING SAME**

(30) Priority: 22.12.2021 JP 2021208440
(71) Applicant: Kyodo Printing Co., Ltd., Tokyo 112-8501 (JP)
(72) Inventor: KARINO, Masahiro, Tokyo 112-8501 (JP); TERADA, Akira, Tokyo 112-8501 (JP); KOBAYASHI, Fumihito, Tokyo 112-8501 (JP)
(74) Representative: Ricker, Mathias
(86) International application number: PCT/JP2022/046852
(87) International publication number: WO 2023/120513

(57) **Abstract**

A printed fabric for assessing authenticity, the printed fabric having a fabric and a print layer located on the fabric, wherein: the smoothness of the fabric, as measured through the smoothness testing method disclosed in JIS P 8155:2010, is 0.5 seconds or greater; and a printed portion of the print layer contains an inorganic infrared-absorbing pigment in an amount ranging from 5 mg/m² to 400 mg/m² inclusive per unit area.

## Description

### FIELD

The present invention relates to a printed fabric for authenticity determination and a method for manufacturing the same.

### BACKGROUND

Authenticity determination and counterfeit prevention are important in valuable securities, for example, paper money, lottery tickets, credit cards, passports, securities and certificates, and wills. Predetermined patterns may be printed on the faces of these securities using a functional coating material that is invisible under visible light and absorbs, for example, infrared light. In this case, authenticity can be determined by comparing, against a predetermined pattern, a pattern identified by irradiating a printed portion with infrared light.

As functional pigments blended into coating materials used for such applications, for example, infrared-absorbent agents such as cesium tungsten oxide (CWO), antimony-doped tin oxide (ATO), indium tin oxide (ITO), and lanthanum hexaboride (LaB₆) are known.

For example, PTL 1 discloses an infrared-absorbent ink comprising infrared-absorbent material fine particles selected from composite tungsten oxides and tungsten oxides having a Magnéli phase and a vehicle.

PTL 2 discloses an anti-counterfeit ink composition using composite tungsten oxide ultrafine particles, wherein the intensity ratio of two predetermined peaks in XRD measurement falls within a specific range.

### [CITATION LIST]

### [PATENT LITERATURE]

[PTL 1] WO 2016/121801
[PTL 2] WO 2017/104855

### SUMMARY

### [TECHNICAL PROBLEM]

The necessity for authenticity determination is also present in fields such as clothing and accessories. In these fields, counterfeit products resembling famous brand products are sometimes sold in competition with genuine products. Such counterfeit products unfairly damage the profits of suppliers of genuine products. Therefore, the suppliers of genuine products have the desire to print on the genuine products a way to enable authenticity determination.

Many clothing and accessories are made from fabrics, which have a larger surface roughness compared to paper substrates, and are thus considered unsuitable for fine printing with functional coating materials for authenticity determination.

The present invention was made in view of the above circumstances. An object of the present invention is to provide a printed fabric that can be used for authenticity determination and a method for manufacturing the same.

### [SOLUTION TO PROBLEM]

The present invention is as follows.
«Aspect 1» A printed fabric for authenticity determination, comprising a fabric and a printing layer on the fabric, wherein
   the fabric has a smoothness, as measured by a smoothness testing method set forth in JIS P8155:2010, of 0.5 s or more, and
   a printed portion of the printing layer comprises 5 mg/m² or more and 300 mg/m² or less of an inorganic infrared-absorbent pigment per unit area of the printed portion.
«Aspect 2» The printed fabric according to Aspect 1, wherein the inorganic infrared-absorbent pigment is one or more selected from
   a composite tungsten oxide, represented by general formula (1): MₓW_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and
   a tungsten oxide having a Magnéli phase, represented by general formula (2): W_{y}O_{z}, wherein W is tungsten; O is oxygen; y and z are each a positive number; and 2.45 ≤ z/y ≤ 2.999.
«Aspect 3» The printed fabric according to Aspect 1 or 2, wherein the printed portion further comprises a cured product of an ultraviolet-curable urethane acrylate resin and an ultraviolet-curable acrylic resin comprising no urethane bond.
«Aspect 4» The printed fabric according to any one of Aspects 1 to 3, wherein the printed portion comprises 5 mg/m² or more and 500 mg/m² of a fluorescent agent per unit area of the printed portion.
«Aspect 5» The printed fabric according to any one of Aspects 1 to 4, wherein the smoothness of the fabric is 50 s or less.
«Aspect 6» The printed fabric according to any one of Aspects 1 to 5, wherein the fabric is a fabric forming a portion of a commercial product selected from clothing, accessories, and upholstery, or a fabric forming a tag attached to the commercial product.
«Aspect 7» A method for manufacturing a printed fabric for authenticity determination, comprising printing an ink comprising an inorganic ultraviolet-absorbent pigment on a fabric to form a printing layer on the fabric, wherein
   the fabric has a smoothness, as measured by a smoothness testing method set forth in JIS P8155:2010, of 0.5 s or more, and
   a printed portion of the printing layer comprises 5 mg/m² or more and 300 mg/m² or less of the inorganic infrared-absorbent pigment per unit area of the printed portion.
«Aspect 8» The method according to claim 7, wherein printing of the ink is carried out by inkjet printing.

### [ADVANTAGEOUS EFFECTS OF INVENTION]

According to the present invention, a printed fabric that can be used for authenticity determination and a method for manufacturing the same are provided.

### DESCRIPTION OF EMBODIMENTS

### <<Printed fabric for authenticity determination>>

The present inventors have discovered that when printing a fine pattern with a functional coating material comprising an infrared-absorbent pigment on a fabric, by keeping the surface roughness of the fabric within a predetermined range, adopting an inorganic infrared-absorbent pigment as the infrared-absorbent pigment, and setting the inorganic infrared-absorbent pigment concentration in the printed portion (ink-deposited portion) to a predetermined range, invisibility under visible light and readability under infrared light are both achieved, thereby leading to the present invention.

The printed fabric of the present invention is
a printed fabric for authenticity determination, comprising a fabric and a printing layer on the fabric, wherein
the fabric has a smoothness, as measured by a smoothness testing method set forth in JIS P8155:2010, of 0.5 s or more, and
a printed portion of the printing layer comprises 5 mg/m² or more and 300 mg/m² or less of an inorganic infrared-absorbent pigment per unit area of the printed portion.

### <Fabric>

A fabric used as the printed fabric for authenticity determination of the present invention has a relatively flat surface. Specifically, the fabric has a smoothness, as measured by a smoothness testing method (Oken method) set forth in JIS P8155:2010, of 0.5 s (seconds) or more. The Oken method in the JIS standards is a test for measuring surface smoothness of "paper" and "paperboard". However, this method is used as a method for measuring surface smoothness of a fabric in the present invention. In the surface smoothness according to the Oken method, a larger number (in seconds) indicates a smoother fabric.

The surface smoothness of the fabric according to the Oken method is 0.5 s or more and may be 0.6 s or more, 0.8 s or more, 1.0 s or more, 1.5 s or more, 2.0 s or more, 3.0 s or more, or 5.0 s or more. From the viewpoint of possibility of authenticity determination, an upper limit of surface smoothness is not set. However, from the viewpoint that the infrared-absorbent pigment concentration in the printed portion of the printed fabric needs to be set within a predetermined range of the present invention to enable authenticity determination, the upper limit value of the surface smoothness is generally 50 s, and when equal to or less than this value, the effect of the present invention is advantageously exhibited. Therefore, the surface smoothness of the printed fabric for authenticity determination of the present invention according to the Oken method may be 50 s or less, or may be 35 s or less. According to the present invention, even when the surface smoothness of the fabric according to the Oken method is 30 s or less, 25 s or less, 20 s or less, 15 s or less, 10 s or less, or 5 s or less, authenticity determination is possible.

When the surface smoothness differs between the front and back of the fabric, the surface smoothness of the side having the printing layer needs only to be within the above range. When the printing layer is present on both the front and back of the fabric, the surface smoothness of either the front or back side needs only to be within the above range.

The fabric may be a woven, knitted, or nonwoven fabric.

The material of the fabric is not limited. The fibers constituting the fabric may be either natural fibers or chemical fibers. Natural fibers may be either animal fibers or plant fibers. Chemical fibers may be either inorganic fibers or organic fibers. Examples of the inorganic fibers include metal fibers, glass fibers, and rock fibers. Examples of the organic fibers include synthetic fibers, semi-synthetic fibers, and regenerated fibers.

From the viewpoint of easily obtaining a fabric having high surface smoothness, the fabric of the printed fabric for authenticity determination of the present invention may be composed of synthetic fibers, for example, may be a fabric composed of nylon, polyester, polyurethane, polyvinyl alcohol, acrylic fibers, or polyolefin fibers.

The fabric of the printed fabric for authenticity determination of the present invention may be a fabric forming a portion of a commercial product such as clothing, accessory, or upholstery, or may be a fabric forming a tag attached to a commercial product.

Clothing is a concept that generally encompasses textile products that people wear or are worn by pets, and includes gloves, socks, hats, belts, ties, scarves, and handkerchiefs. Accessories include jewelry, bags, and wallets. Upholstery includes curtains, carpets, and tablecloths.

### <Printing layer>

A printing layer of the printed fabric for authenticity determination of the present invention is present on the fabric. The printing layer may be present only on one side of the fabric, or may be present on both sides of the fabric.

The printing layer comprises 5 mg/m² or more and 300 mg/m² or less of an inorganic infrared-absorbent pigment per unit area of a printed portion. The printed portion refers to a portion of the printing layer on which an ink comprising an inorganic infrared-absorbent pigment is applied. This "printed portion" does not include a portion having the fabric exposed or a portion on which only an ink comprising no inorganic infrared-absorbent pigment is applied.

When the inorganic infrared-absorbent pigment concentration in the printed portion is 5 mg/m² or more per unit area of the printed portion, the printing layer exhibits sufficient infrared absorption, and a printed pattern can be identified by irradiation with infrared light. When the concentration is 300 mg/m² or less, invisibility to the naked eye under visible light irradiation can be maintained, and security can be maintained.

The inorganic infrared-absorbent pigment concentration in the printed portion of the printing layer, from the viewpoint of infrared light absorbency, is 5 mg/m² or more and may be 8 mg/m² or more, 10 mg/m² or more, 15 mg/m² or more, or 20 mg/m² or more, and from the viewpoint of invisibility under visible light, is 300 mg/m² or less and may be 250 mg/m² or less, 200 mg/m² or less, 150 mg/m² or less, or 100 mg/m² or less.

The printed portion of the printing layer may comprise an optional component, in addition to the inorganic infrared-absorbent pigment. The optional component, for example, may be one or more selected from binder resins, dispersants, fluorescent agents, colorants, coupling agents, viscosity modifiers, surface tension modifiers, and pH adjusters.

Details of the inorganic infrared-absorbent pigment and the binder resin, dispersant, and fluorescent agent of the optional components will be described in another section below.

The printed pattern of the printed portion of the printing layer, i.e., the shape recognized when the printing layer is viewed from above under infrared irradiation, may be of any pattern as long as authenticity can be determined. The printed pattern, for example, may be a character (such as hiragana, katakana, kanji, Arabic numeral, Roman numeral, alphabet, Hangul, or another international character), a logo mark, a barcode, a two-dimensional code, a tint block, a pattern, a picture, or a combination thereof, or another design.

The size (definition) of the printed pattern may be appropriately set according to the performance of the reader (including the naked eye) used in authenticity determination. For example, when the printed pattern is a character, the size of the character, for example, may be 6 points or higher, 8 points or higher, 10 points or higher, or 12 points or higher. The upper limit of the size of the printed pattern is not particularly limited, as long as the information required for authenticity determination can be printed within a predetermined printing range.

### <Inorganic infrared-absorbent pigment>

The inorganic infrared-absorbent pigment contained in the printed portion of the printing layer of the printed fabric for authenticity determination of the present invention needs only to be a pigment that allows the printed portion to be invisible under visible light and readable under infrared light. Such an inorganic infrared-absorbent pigment, for example, may be one or more selected from tungsten-based infrared-absorbent pigments, antimony-doped tin oxide (ATO), indium tin oxide (ITO), and lanthanum hexaboride (LaB₆).

Among these, tungsten-based infrared-absorbent pigments, which can form printed portions in which invisibility under visible light and readability under infrared light are both high, are particularly preferable.

The tungsten-based infrared-absorbent pigment, for example, may be one or more selected specifically from
a composite tungsten oxide, represented by general formula (1): MₓW_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and
a tungsten oxide having a Magnéli phase, represented by general formula (2): W_{y}O_{z}, wherein W is tungsten; O is oxygen; y and z are each a positive number; and 2.45 ≤ z/y ≤ 2.999.

Such a tungsten-based infrared-absorbent pigment, for example, may be manufactured by the manufacturing method of a composite tungsten oxide or a tungsten oxide having a Magnéli phase described in Japanese Unexamined Patent Publication (Kokai) No. 2005-187323.

An element M is added to the composite tungsten oxide represented by the general formula (1). Therefore, in the general formula (1) even when z/y = 3.0, free electrons are generated, absorption characteristics from the free electrons are exhibited in the near-infrared light wavelength region, and the composite tungsten oxide is effective as a material that absorbs near-infrared rays near the wavelength of 1,000 nm. The element M, from the viewpoint of improving optical characteristics and weatherability as a near-infrared-absorbent material, may be one or more selected from the group consisting of Cs, Rb, K, Tl, In, Ba, Li, Ca, Sr, Fe, and Sn.

The composite tungsten oxide represented by the general formula (1) may be treated with a silane coupling agent. By treating with a silane coupling agent, near-infrared absorbency and transparency in the visible light wavelength region can be enhanced.

When the value of x/y indicating the addition amount of the element M is greater than 0, sufficient free electrons are generated and a near-infrared absorption effect can be sufficiently demonstrated. The larger the addition amount of the element M, the greater the number of free electrons supplied, and the greater the near-infrared absorption effect. However, the number of free electrons supplied normally saturates at the value of x/y of about 1. When the value of x/y is 1 or less, the formation of an impurity phase in a pigment-containing layer can be prevented.

The value of x/y may be 0.001 or greater, 0.2 or greater, or 0.30 or greater, and may be 0.85 or less, 0.5 or less, or 0.35 or less. Particularly, the value of x/y can be 0.33.

The value of z/y in the general formulas (1) and (2) indicates the level of control of oxygen amount. In the composite tungsten oxide represented by the general formula (1), when the value of z/y satisfies the relationship of 2.2 ≤ z/y ≤ 3.0, the same oxygen control mechanism operates as the tungsten oxide represented by the general formula (2). In addition thereto, even when z/y = 3.0, free electrons are supplied due to the addition of the element M. In the general formula (1), the value of z/y may satisfy the relationship of 2.45 ≤ z/y ≤ 3.0.

The composite tungsten oxide represented by the general formula (1) preferably comprises a hexagonal crystal structure or consists of a hexagonal crystal structure. When the composite tungsten oxide represented by the general formula (1) has a hexagonal crystal structure, transmission in the visible light wavelength region of the pigment is increased, and absorption in the near-infrared light wavelength region is increased. Cations of the element M are arranged in the voids of the hexagonal crystal.

Generally, when an element having a large ionic radius as the element M is added, hexagonal crystals are formed. Specifically, hexagonal crystals are easily formed when an element having a large ionic radius such as Cs, K, Rb, Tl, In, Ba, Sn, Li, Ca, Sr, or Fe is added. However, the element M in the composite tungsten oxide represented by the general formula (1) is not limited to these elements as long as the added element M is present in the hexagonal voids formed by WO₆ units.

When the composite tungsten oxide having a hexagonal crystal structure and represented by the general formula (1) has a uniform crystal structure, the addition amount of the added element M can be set to 0.2 or greater and 0.5 or less or can be 0.30 or greater and 0.35 or less in terms of the value of x/y, and can be particularly set to 0.33. When the value of x/y is 0.33, it is considered that the added element M is arranged substantially in all of the hexagonal voids.

Other than hexagonal, the crystal structure may be tetragonal or cubic tungsten bronze. Depending on the crystal structure, the absorption sites in the near-infrared light wavelength region of the composite tungsten oxide represented by the general formula (1) tend to change, and the absorption sites tend to shift toward the longer wavelength side in the order of cubic, tetragonal, and hexagonal. This is accompanied by lower absorption in the visible light wavelength region in the order of hexagonal, tetragonal, and cubic. In applications where more light transmitted in the visible light wavelength region and more light absorbed in the near-infrared light wavelength region are desired, a hexagonal tungsten bronze may be used.

The tungsten oxide having a Magnéli phase represented by the general formula (2), having a so-called "Magnéli phase", a compositional ratio in which the value of z/y satisfies the relationship of 2.45 ≤ z/y ≤ 2.999, serves as a pigment exhibiting high stability and high absorption characteristics in the near-infrared light wavelength region.

The composite tungsten oxide represented by the general formula (1) and the tungsten oxide having a Magnéli phase represented by the general formula (2) exhibit significant absorption of light in the near-infrared light wavelength region, particularly near the wavelength of 1,000 nm. Therefore, the transmitted color tone thereof may be bluish to greenish.

The particle size of the inorganic infrared-absorbent pigment may be appropriately set according to purpose.

When the particle size of the inorganic infrared-absorbent pigment is 2,000 nm or less by volume average, the difference between the peak of transmittance (reflectance) in the visible light wavelength region and the bottom of absorption in the near-infrared wavelength region becomes large, and thus a printed portion having transparency in the visible light wavelength region is obtained. When the particle size of the inorganic infrared-absorbent pigment is 200 nm or less, 100 nm or less, 50 nm or less, or 30 nm or less, scattering of visible light by the particles can be decreased, and a printed portion having high transparency in the visible light wavelength region is obtained.

When the dispersed particle size of the inorganic infrared-absorbent pigment is 1 nm or more, 3 nm or more, 5 nm or more, or 10 nm or more, industrial production is facilitated, and sufficiently high infrared absorbency is obtained, thereby facilitating authenticity determination.

The particle size by volume average of the inorganic infrared-absorbent pigment may be a dispersed particle size determined from light scattering information obtained by irradiating fine particles in Brownian motion with laser light.

### <Binder resin>

A binder resin has a function of retaining the inorganic infrared-absorbent pigment and an optionally used fluorescent agent in the printed portion of the printing layer of the printed fabric. The binder resin may be appropriately selected for use from known binder resins contained in coating materials, for example, polyurethane resins, fluororesins, urethane acrylate resins, acrylic resins, and epoxy resins.

When the binder resin comprises a binder resin having a urethane bond, dispersibility of the inorganic infrared-absorbent pigment is improved, and the inorganic infrared-absorbent pigment is evenly arranged in the printed portion, whereby uniform visibility under infrared irradiation is obtained.

Since a binder resin having a urethane bond has high viscosity, coatability of an ink comprising such a binder resin is impaired. Therefore, an acrylic resin comprising no urethane bond may be blended with an ink comprising a binder resin having a urethane bond to modify viscosity. An acrylic resin comprising no urethane bond has low viscosity and good compatibility with a binder resin having a urethane bond, and are thus suitable as a resin for viscosity modification.

In order for the printed fabric to exhibit excellent washing resistance, the binder resin may be a crosslinked cured product.

From the above viewpoint, the binder resin contained in the printed portion of the printing layer of the printed fabric of the present invention may comprise a cured product of an ultraviolet-curable urethane acrylate resin and an ultraviolet-curable acrylic resin comprising no urethane bond. The concept of this "cured product of an ultraviolet-curable urethane acrylate resin and an ultraviolet-curable acrylic resin comprising no urethane bond" includes a cured product of an ultraviolet-curable urethane acrylate resin, a cured product of an ultraviolet-curable acrylic resin comprising no urethane bond, and a crosslinked product of an ultraviolet-curable urethane acrylate resin and an ultraviolet-curable acrylic resin comprising no urethane bond.

Hereinafter, an aspect of a preferable binder resin (cured product) contained in the printed portion of the printing layer of the printed fabric of the present invention before curing will be described.

### (Ultraviolet-curable urethane acrylate resin)

The ultraviolet-curable urethane acrylate resin used in the present invention is not particularly limited as long as the resin is a polymer having a urethane bond and an acryloyl group derived from an acrylic acid.

The ultraviolet-curable urethane acrylate resin can be cured with ultraviolet rays by having an acryloyl group in the molecular chain. A hydrogen bond can be formed with another molecule by having a urethane bond in the molecular chain. As a result, a printed object having excellent base resistance, particularly washing resistance, can be provided.

The acryloyl group contained in the ultraviolet-curable urethane acrylate resin is a group derived from an acrylic acid. The acrylic acid may be of a monofunctional type or a polyfunctional type.

The ultraviolet-curable urethane acrylate resin used in the present invention preferably comprises a plurality of acryloyl groups. The number of acryloyl groups contained in the ultraviolet-curable urethane acrylate resin may be 2 or greater, 3 or greater, 4 or greater, 6 or greater, or 9 or greater.

When the number of acryloyl groups is 3 or greater, crosslinks between molecules can be formed and base resistance, particularly washing resistance, can thus be further improved.

The urethane bond of the ultraviolet-curable urethane acrylate resin is formed by reacting an isocyanate group with a hydroxy group. The urethane bond of the ultraviolet-curable urethane acrylate resin used in the present invention may be formed either from an aromatic isocyanate compound or an aliphatic isocyanate compound.

The compound comprising a hydroxy group for forming a urethane bond of the ultraviolet-curable urethane acrylate resin may be either a polyether or a polyester, or may be a polymer or a low molecular weight diol.

Specifically, the ultraviolet-curable urethane acrylate resin used in the present invention may be a polymer having a certain molecular weight, an oligomer, or a prepolymer.

The content of the ultraviolet-curable urethane acrylate resin in the printed portion of the printing layer of the printed fabric of the present invention, as a ratio of the mass of the portion from the ultraviolet-curable urethane acrylate resin in the binder resin relative to 100 parts by mass of the inorganic infrared-absorbent pigment, for example, may be 10 parts by mass or more, 20 parts by mass or more, 30 parts by mass or more, 40 parts by mass or more, 50 parts by mass or more, 100 parts by mass or more, 150 parts by mass or more, 200 parts by mass or more, 300 parts by mass or more, 400 parts by mass or more, or 500 parts by mass or more, and for example, may be 5,000 parts by mass or less, 4,000 parts by mass or less, 3,000 parts by mass or less, 2,500 parts by mass or less, 2,000 parts by mass or less, or 1,500 parts by mass or less.

### (Ultraviolet-curable acrylic resin comprising no urethane bond)

The ultraviolet-curable acrylic resin comprising no urethane group has an effect of satisfactorily dispersing the inorganic infrared-absorbent pigment and an optionally contained fluorescent agent and suppressing an increase in ink viscosity caused by the ultraviolet-curable urethane acrylate resin.

When focusing on the function of suppressing an increase in ink viscosity, the ultraviolet-curable acrylic resin comprising no urethane bond may be a low-viscosity body, may be a monomer, an oligomer, or a prepolymer, and may particularly be a monomer. The monomer may be any known acrylic monomer used in ultraviolet-curable inks.

Examples of such an acrylic monomer can include acrylates having an ethylenically unsaturated bond. One or more selected from monofunctional acrylates and polyfunctional acrylates may be used.

Examples of the monofunctional acrylate include caprolactone acrylate, isodecyl acrylate, isooctyl acrylate, isomyristyl acrylate, isostearyl acrylate, 2-ethylhexyl-diglycol diacrylate, 2-hydroxybutyl acrylate, 2-acryloyloxyethyl hexahydrophthalic acid, neopentyl glycol acrylic acid benzoic acid ester, isoamyl acrylate, lauryl acrylate, stearyl acrylate, butoxyethyl acrylate, ethoxy-diethylene glycol acrylate, methoxy-triethylene glycol acrylate, methoxy-polyethylene glycol acrylate, methoxydipropylene glycol acrylate, phenoxyethyl acrylate, phenoxy-polyethylene glycol acrylate, nonylphenol ethylene oxide adduct acrylate, tetrahydrofurfuryl acrylate, isobonyl acrylate, 2-hydroxyethyl acrylate, 2-hydroxypropyl acrylate, 2-hydroxy-3-phenoxypropyl acrylate, 2-acryloyloxyethyl-succinic acid, 2-acryloyloxyethyl-phthalic acid, and 2-acryloyloxyethyl-2-hydroxyethyl-phthalic acid.

Examples of the bifunctional acrylate include hydroxypivalic acid neopentyl glycol diacrylate, alkoxylated hexanediol diacrylate, polytetramethylene glycol diacrylate, trimethylolpropane acrylic acid benzoic acid ester, diethylene glycol diacrylate, triethylene glycol diacrylate, tetraethylene glycol diacrylate, polyethylene glycol (200) diacrylate, polyethylene glycol (400) diacrylate, polyethylene glycol (600) diacrylate, neopentyl glycol diacrylate, 1,3-butylene glycol diacrylate, 1,4-butanediol diacrylate, 1,6-hexanediol diacrylate, 1,9-nonanediol diacrylate, dimethylol-tricyclodecane diacrylate, and bisphenol A diacrylate.

Examples of the trifunctional or higher-polyfunctional acrylate include ethoxylated isocyanuric acid triacrylate, ε-caprolactone-modified tris-(2-acryloxyethyl) isocyanurate, pentaerythritol triacrylate, trimethylolpropane triacrylate, ditrimethylolpropane tetraacrylate, pentaerythritol tetraacrylate, dipentaerythritol polyacrylate, ethoxylated pentaerythritol tetraacrylate, and dipentaerythritol hexaacrylate.

The content of the ultraviolet-curable acrylic resin comprising no urethane group in the printed portion of the printing layer of the printed fabric of the present invention, as a ratio of the mass of the portion from the ultraviolet-curable acrylic resin comprising no urethane group of the binder resin relative to 100 parts by mass of the inorganic infrared-absorbent pigment, for example, may be 500 parts by mass or more, 600 parts by mass or more, 700 parts by mass or more, 1,000 parts by mass or more, 2,000 parts by mass or more, 3,000 parts by mass or more, 4,000 parts by mass or more, or 5,000 parts by mass or more, and for example, may be 50,000 parts by mass or less, 40,000 parts by mass or less, 30,000 parts by mass or less, 25,000 parts by mass or less, 20,000 parts by mass or less, or 1,500 parts by mass or less.

The use ratio of the ultraviolet-curable acrylic resin comprising no urethane group to the ultraviolet-curable urethane acrylate resin, as a ratio of the mass of the portion from the ultraviolet-curable acrylic resin comprising no urethane group relative to 100 parts by mass of the portion from the ultraviolet-curable urethane acrylate resin of the binder resin, for example, may be 100 parts by mass or more, 500 parts by mass or more, 1,000 parts by mass or more, 1,500 parts by mass or more, or 2,000 parts by mass or more, and for example, may be 10,000 parts by mass or more, 8,000 parts by mass or more, 6,000 parts by mass or more, 5,000 parts by mass or more, 4,000 parts by mass or more, 3,000 parts by mass or more, or 2,000 parts by mass or more.

### <Dispersant>

A dispersant may be used to enhance dispersibility of the inorganic infrared-absorbent pigment and the optionally used fluorescent agent.

As a dispersant in the present invention, for example, a compound having a functional group such as an amino group, a hydroxyl group, a carboxyl group, or an epoxy group may be used.

### <Fluorescent agent>

A fluorescent agent is a component that fluoresces by absorbing ultraviolet rays. More specifically, a fluorescent agent is a component that, when excited by ultraviolet light and returning to a low energy state, fluoresces visible light having spectral peaks in each color. In the present invention, the fluorescent agent needs only to be a substance that fluoresces by absorbing ultraviolet rays, and is not particularly limited. Any known pigment used in the field of inks may be used.

The fluorescent agent may be an organic fluorescent agent or an inorganic fluorescent agent.

Examples of the organic fluorescent agent include Lumogen L Yellow, Lumogen Brilliant Yellow, and Lumogen Brilliant Green. Examples of the inorganic fluorescent agent include compounds represented by M-Al₂O₄ (M is a fluorescent pigment obtained by using a compound composed of strontium (Sr) and barium (Ba) as a seed crystal, adding europium (Eu) as an activator, and adding dysprosium (Dy) as a coactivator).

The concentration of the fluorescent agent in the printing layer of the printed fabric of the present invention, per unit area of the printed portion, may be 5 mg/m² or more, 10 mg/m² or more, 15 mg/m² or more, 20 mg/m² or more, 30 mg/m² or more, or 40 mg/m² or more. This concentration, for example, may be 400 mg/m² or less, 300 mg/m² or less, 250 mg/m² or less, 200 mg/m² or less, 150 mg/m² or less, or 100 mg/m² or less.

When 5 mg/m² or more of the fluorescent agent is contained per unit area of the printed portion, the printing layer exhibits sufficiently high fluorescence. When this concentration is 400 mg/m² or less, the dispersibility of the fluorescent agent is excellent.

### <<Method for manufacturing printed fabric>>

According to another viewpoint of the present invention, a method for manufacturing a printed fabric as described above is provided.

The method for manufacturing a printed fabric of the present invention is
a method for manufacturing a printed fabric for authenticity determination, comprising printing an ink comprising an inorganic infrared-absorbent pigment on a fabric to form a printing layer on the fabric, wherein
the fabric has a smoothness, as measured by a smoothness testing method set forth in JIS P8155:2010, of 0.5 s or more, and
a printed portion of the printing layer comprises 5 mg/m² or more and 300 mg/m² or less of the inorganic infrared-absorbent pigment per unit area of the printed portion.

The fabric may be appropriately selected according to the above descriptions, depending on the desired fabric of the printed fabric of the present invention.

The ink comprising an inorganic infrared-absorbent pigment may comprise, in addition to the inorganic infrared-absorbent pigment, a component contained in the printed portion of the printing layer. The ink, for example, may comprise an inorganic infrared-absorbent pigment and a binder resin, and optionally a fluorescent agent, and may further comprise a solvent. When the binder resin is ultraviolet-curable, the ink may comprise an uncured binder resin and a photopolymerization initiator. The ink may further comprise one or more additives generally contained in a coating material, for example, a dispersant, a colorant, a coupling agent, a viscosity modifier, a surface tension modifier, or a pH adjuster.

Among the components of the above ink, the inorganic infrared-absorbent pigment, binder resin (before curing), fluorescent agent, and dispersant can be used as described above as the components contained in the printed portion of the printed fabric of the present invention. Hereinafter, the photopolymerization initiator and solvent contained in the ink will be described.

### <Photopolymerization initiator>

A photopolymerization initiator may be appropriately selected for use from known photopolymerization initiators used in ultraviolet-curable inks.

Examples of the photopolymerization initiator include acetophenones such as acetophenone, α-aminoacetophenone, 2,2-diethoxyacetophenone, p-dimethylaminoacetophenone, 2-hydroxy-2-methyl-1-phenylpropan-1-one, benzyldimethylketal, 1-(4-isopropylphenyl)-2-hydroxy-2-methylpropan-1-one, 4-(2-hydroxyethoxy)phenyl-(2-hydroxy-2-methylpropyl)ketone, 4-(2-hydroxyethoxy)phenyl-(2-hydroxy-2-propyl)ketone, 1-hydroxycyclohexyl-phenylketone, 2-methyl-2-morpholino(4-thiomethylphenyl)propan-1-one, 2-benzyl-2-dimethylamino-1-(4-morpholinophenyl)-butanone; benzoins such as benzoin, benzoin methyl ether, benzoin ethyl ether, benzoin-n-propyl ether, benzoin isopropyl ether, benzoin-n-butyl ether, benzoin isobutyl ether, benzoin dimethyl ketal, and benzoin peroxide; acylphosphine oxides such as 2,4,6-trimethoxybenzoin diphenyl phosphine oxide; benzyl and methylphenyl-glyoxyesters; benzophenones such as benzophenone, methyl-4-phenylbenzophenone, o-benzoyl benzoate, 2-chlorobenzophenone, 4,4'-dichlorobenzophenone, hydroxybenzophenone, 4-benzoyl-4'-methyl-diphenylsulfide, acryl-benzophenone, 3,3',4,4'-tetra(t-butylperoxycarbonyl)benzophenone, and 3,3'-dimethyl-4-methoxybenzophenone; thioxanthones such as 2-methylthioxanthone, 2-isopropylthioxanthone, 2,4-dimethylthioxanthone, 2,4-diethylthioxanthone, 2-chlorothioxanthone, and 2,4-dichlorothioxanthone; aminobenzophenones such as Michler's ketone and 4,4'-diethylaminobenzophenone; tetramethylthiuram monosulfide; azobisisobutyronitrile; di-tert-butyl peroxide; 10-butyl-2-chloroacridone; 2-ethylanthraquinone; 9,10-phenanthrenequinone; camphorquinone; and titanocenes, and combinations thereof.

Ethyl 4-dimethylaminobenzoate or isoamyl 4-dimethylaminobenzoate may be used in combination with the above polymerization initiator.

The use amount of photopolymerization initiator is not particularly limited, and for example, may be 1 part by mass or more, 2 parts by mass or more, 3 parts by mass or more, 4 parts by mass or more, or 5 parts by mass or more, and may be 20 parts by mass or less, 15 parts by mass or less, 10 parts by mass or less, 8 parts by mass or less, or 6 parts by mass or less, relative to a total of 100 parts by mass of the ultraviolet-curable urethane acrylate resin and the ultraviolet-curable acrylic resin comprising no urethane group.

### <Solvent>

The solvent is not particularly limited as long as each component contained in the ink is dispersed or dissolved.

Examples of the solvent include alcohols such as ethanol, propanol, butanol, isopropyl alcohol, isobutyl alcohol, and diacetone alcohol; ethers such as methyl ether, ethyl ether, and propyl ether; esters such as ethyl acetate; ketones such as acetone, methyl ethyl ketone, diethyl ketone, cyclohexanone, ethyl isobutyl ketone, and methyl isobutyl ketone; aromatic hydrocarbons such as toluene, xylene, and benzene; aliphatic hydrocarbons such as normal hexane, heptane, and cyclohexane; and glycol ethers such as propylene glycol monomethyl ether acetate and propylene glycol monoethyl ether. One or more selected therefrom may be used.

The content of the solvent in the ink, based on the total mass of the ink, for example, may be 0.1% by mass or greater, 0.5% by mass or greater, 1% by mass or greater, 3% by mass or greater, or 5% by mass or greater, and may be 50% by mass or less, 30% by mass or less, 20% by mass or less, 15% by mass or less, 10% by mass or less, 5% by mass or less, 3% by mass or less, or 1% by mass or less.

The printing of the ink onto a fabric may be carried out by, for example, flexographic printing, letterpress printing, offset printing, intaglio printing, gravure printing, screen printing, or inkjet printing. Of these printing methods, inkjet printing, which uses an inkjet head capable of forming fine patterns, is particularly suitable.

### EXAMPLES

### «Materials»

The materials used in the Examples and Comparative Examples are shown below.

### (1) Tungsten-based infrared-absorbent pigment

Cesium tungsten oxide (CWO) dispersion liquid: "YMS-01A-2", CWO content ratio of 25% by mass, manufactured by Sumitomo Metal Mining Co., Ltd.
Hexagonal Cs_{0.33}WO₃: 25% by mass
Propylene glycol monomethyl ether acetate: 58.9% by mass
Dipropylene glycol monomethyl ether: 1.86% by mass
Butyl acetate: 1.74% by mass
Dispersant: 12.5% by mass

### (2) Fluorescent agent

R332: red fluorescent agent (fluoresced in red during UV light irradiation), "Lumilux Red CD 332", powder, manufactured by Honeywell Japan, Ltd.

### (3) Ultraviolet-curable urethane acrylate resin

WLS-373: "LUXYDIR^{™} WLS-373", 6 acryloyl groups per molecule, resin content of 100%, manufactured by DIC Corporation

### (4) Ultraviolet-curable acrylic resin comprising no urethane bond

BESTCURE: acrylic monomer "BESTCURE UV monomer for dispersion", 100% photosensitive monomer, manufactured by T&K TOKA Corporation

### (5) Photopolymerization initiator

IRGACURE: photo-radical initiator "IRGACURE^{™} 500", manufactured by BASF SE

### (6) Fabric

Polyester cloth: smoothness of 5.3 s
Nylon taffeta cloth: smoothness of 1.0 s
Polyester satin cloth: smoothness of 0.7 s
Waffle cloth: smoothness of 0.1 s
Towel cloth: smoothness of 0.1 s
High-quality paper (Reference Example): smoothness of 118 s

The smoothness of each of the above cloths and high-quality paper is a value obtained by measuring in accordance with a smoothness testing method (Oken method) set forth in JIS P8155:2010, using an Oken-type air permeability and smoothness tester manufactured by Kumagai Riki Kogyo Co., Ltd.

### <<Preparation of infrared-absorbent ultraviolet-curable ink>>

### <Comparative Example 1-1>

10.0 g of a dispersion liquid (YMS-01A-2, manufactured by Sumitomo Metal Mining Co., Ltd.) comprising cesium tungsten oxide (CWO) as a tungsten-based infrared-absorbent pigment, 1.9 g of "LUXIDIA^{™} WLS-373" manufactured by DIC Corporation as an ultraviolet-curable urethane acrylate resin, 19.3 g of "BESTCURE UV monomer for dispersion" manufactured by T&K TOKA Corporation as an ultraviolet-curable acrylic resin comprising no urethane bond, and 0.85 g of "IRGACURE^{™} 500" manufactured by BASF SE as a photopolymerization initiator were mixed to prepare an infrared-absorbent ultraviolet-curable ink. The specific gravity of the ink, as measured by a "DMA4100" density/specific gravity/concentration meter manufactured by Anton Paar GmbH, in accordance with JIS K 0061, was 1.10 g/cm³.

### <Examples 1-1 to 1-5 and Comparative Example 1-2>

Except that the composition was changed as described in Table 1-1, an infrared-absorbent ultraviolet-curable ink was prepared in the same manner as in Comparative Example 1-1. The specific gravities of the inks obtained in the Examples and Comparative Examples are collectively shown in Table 1-1.

### <<Manufacture of printed fabric>>

Inkjet printing was carried out with the infrared-absorbent ultraviolet-curable inks obtained in the above Examples and Comparative Examples on various fabrics and high-quality paper to form printing layers. The inkjet printing was carried out using an inkjet head "KJ4A-RH" manufactured by Kyocera Corporation at a resolution of 600 dpi, a discharge amount of 7 pL, and a printing speed of 10 m/min to form a printing layer consisting of 12-point characters of the "OCR-B" font in accordance with JIS X 9001.

### «Evaluation»

### (1) Invisibility under visible light

The printing layer of a manufactured printed fabric was visually observed and evaluated by the following criteria.
A: if printed characters could not be confirmed
B: if printed characters were difficult to perceive
C: if printed characters were perceivable

### (2) Visibility under infrared light

The printing layer of a manufactured printed fabric was irradiated with infrared light, and images taken with an IR camera were visually observed. Infrared light was emitted using an infrared LED having a wavelength of 940 nm through a filter for cutting light having a wavelength of 820 nm or less. An IR camera with a pixel count of 250000 pixels was used, the lens angles of view were set to 67° horizontally and 47° vertically, and photographs were taken at a photographing range of 22 mm × 18 mm. The visual observation results were evaluated by the following criteria.
A: if printed characters were dense and clearly visible
B: if printed characters could be identified
C: if printed characters could not be identified

### (3) Washing resistance

In accordance with the washing fastness test of JIS L 0844 No. A-2, the printed fabric was immersed in a washing liquid under the following conditions, then washed with water and dried, and then evaluated according to the above "(2) Visibility under infrared light" by the same criteria.

The above evaluation results are shown in Tables 1-2 to 1-5. The numerical values in the "Pigment concentration in printed portion" column shown in Tables 1-2 to 1-5 were determined by calculation from the head resolution, inkjet printing discharge amount, ink specific gravity, and content of the inorganic infrared-absorbent pigment in the ink.

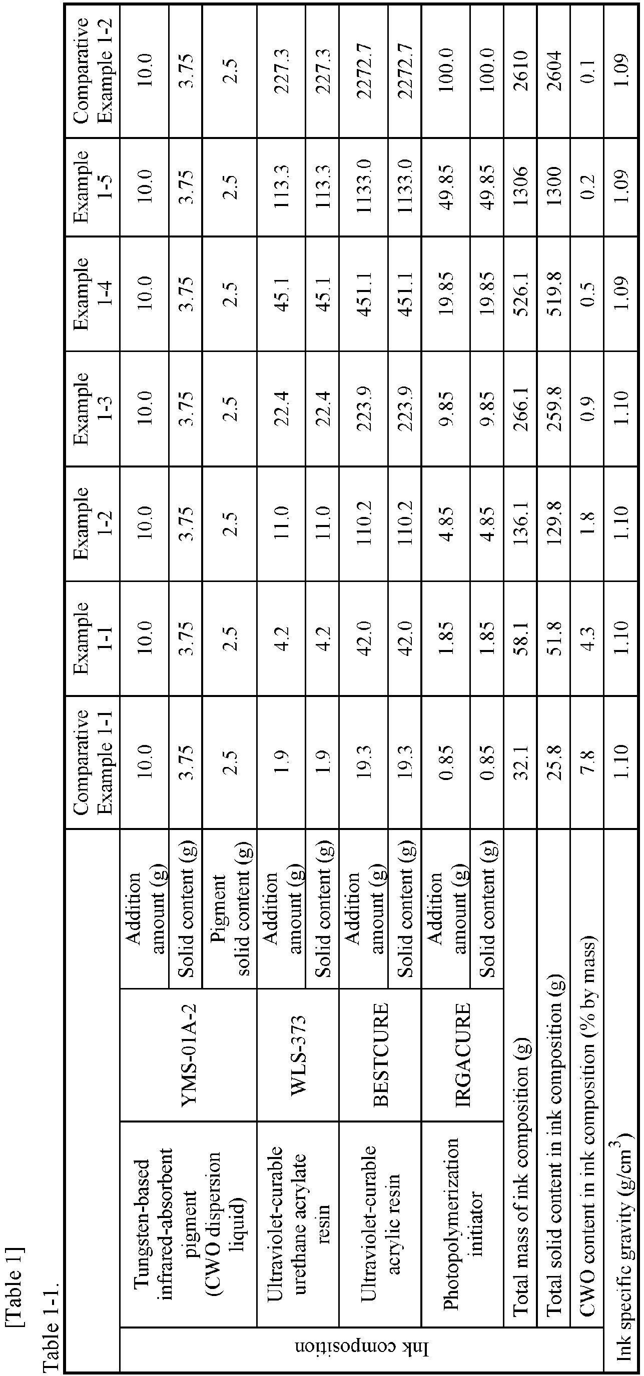

**[Table 2]**

| Table 1-2. | | | | | | |
|---|---|---|---|---|---|---|
| | Infrared-absorbent pigment concentration | | Evaluation | Polyester cloth | Nylon taffeta cloth | Polyester satin cloth |
| | Pigment concentration in ink (wt%) | Pigment concentration in printed portion (mg/m²) | | Smoothness 5.3 s | Smoothness 1.0 s | Smoothness 0.7 s |
| Comparative Example 1-1 | 7.8 | 334.8 | Invisibility under visible light | C | C | C |
| | | | Visibility under infrared light | A | A | A |
| | | | Washing resistance | A | A | A |
| Example 1-1 | 4.3 | 184.9 | Invisibility under visible light | B | B | B |
| | | | Visibility under infrared light | A | A | A |
| | | | Washing resistance | A | A | A |
| Example 1-2 | 1.8 | 78.9 | Invisibility under visible light | B | B | B |
| | | | Visibility under infrared light | A | A | A |
| | | | Washing resistance | A | A | A |
| Example 1-3 | 0.9 | 40.4 | Invisibility under visible light | B | B | B |
| | | | Visibility under infrared light | A | A | A |
| | | | Washing resistance | B | B | B |

**[Table 3]**

| Table 1-3. | | | | | | |
|---|---|---|---|---|---|---|
| | Infrared-absorbent pigment concentration | | Evaluation | Waffle cloth | Towel cloth | High-quality paper (Reference Example) |
| | Pigment concentration in ink (wt%) | Pigment concentration in printed portion (mg/m²) | | Smoothness 0.1 s | Smoothness 0.1 s | Smoothness 118 s |
| Comparative Example 1-1 | 7.8 | 334.8 | Invisibility under visible light | A | A | C |
| | | | Visibility under infrared light | C | C | A |
| | | | Washing resistance | C | C | A |
| Example 1-1 | 4.3 | 184.9 | Invisibility under visible light | A | A | B |
| | | | Visibility under infrared light | C | C | A |
| | | | Washing resistance | C | C | A |
| Example 1-2 | 1.8 | 78.9 | Invisibility under visible light | A | A | B |
| | | | Visibility under infrared light | C | C | A |
| | | | Washing resistance | C | C | A |
| Example 1-3 | 0.9 | 40.4 | Invisibility under visible light | A | A | B |
| | | | Visibility under infrared light | C | C | A |
| | | | Washing resistance | C | C | A |

**[Table 4]**

| Table 1-4. | | | | | | |
|---|---|---|---|---|---|---|
| | Infrared-absorbent pigment concentration | | Evaluation | Polyester cloth | Nylon taffeta cloth | Polyester satin cloth |
| | Pigment concentration in ink (wt%) | Pigment concentration in printed portion (mg/m²) | | Smoothness 5.3 s | Smoothness 1.0 s | Smoothness 0.7 s |
| Example 1-4 | 0.5 | 20.2 | Invisibility under visible light | A | A | A |
| | | | Visibility under infrared light | A | B | A |
| | | | Washing resistance | B | B | B |
| Example 1-5 | 0.2 | 8.2 | Invisibility under visible light | A | A | A |
| | | | Visibility under infrared light | B | B | B |
| | | | Washing resistance | B | C | C |
| Comparative Example 1-2 | 0.1 | 4.1 | Invisibility under visible light | A | A | A |
| | | | Visibility under infrared light | C | C | C |
| | | | Washing resistance | C | C | C |

**[Table 5]**

| Table 1-5. | | | | | | |
|---|---|---|---|---|---|---|
| | Infrared-absorbent pigment concentration | | Evaluation | Waffle cloth | Towel cloth | High-quality paper (Reference Example) |
| | Pigment concentration in ink (wt%) | Pigment concentration in printed portion (mg/m²) | | Smoothness 0.1 s | Smoothness 0.1 s | Smoothness 118 s |
| Example 1-4 | 0.5 | 20.2 | Invisibility under visible light | A | A | A |
| | | | Visibility under infrared light | C | C | A |
| | | | Washing resistance | C | C | B |
| Example 1-5 | 0.2 | 8.2 | Invisibility under visible light | A | A | A |
| | | | Visibility under infrared light | C | C | B |
| | | | Washing resistance | C | C | B |
| Comparative Example 1-2 | 0.1 | 4.1 | Invisibility under visible light | A | A | A |
| | | | Visibility under infrared light | C | C | B |
| | | | Washing resistance | C | C | B |

### <<Preparation of infrared-absorbent fluorescent ultraviolet-curable ink>>

### <Example 2-1>

10.0 g of a dispersion liquid (YMS-01A-2, manufactured by Sumitomo Metal Mining Co., Ltd.) comprising cesium tungsten oxide (CWO) as a tungsten-based infrared-absorbent pigment, 12.5 g of the red fluorescent agent "Lumilux Red CD 332" manufactured by Honeywell Japan, Ltd. as a fluorescent agent, 9.9 g of "LUXIDIA^{™} WLS-373" manufactured by DIC Corporation as an ultraviolet-curable urethane acrylate resin, 98.8 g of "BESTCURE UV monomer for dispersion" manufactured by T&K TOKA Corporation as an ultraviolet-curable acrylic resin comprising no urethane bond, and 4.35 g of "IRGACURE^{™} 500" manufactured by BASF SE as a photopolymerization initiator were mixed to prepare an infrared-absorbent fluorescent ultraviolet-curable ink. The specific gravity of the ink, as measured by a "DMA4100" density/specific gravity/concentration meter manufactured by Anton Paar GmbH, in accordance with JIS K 0061, was 1.10 g/cm³.

### <Examples 2-2 to 2-5 and Comparative Example 2-1>

Except that the composition was changed as described in Table 2-1, an infrared-absorbent fluorescent ultraviolet-curable ink was prepared in the same manner as in Example 2-1. The specific gravities of the inks obtained in the Examples and Comparative Examples are collectively shown in Table 2-1.

### «Evaluation»

(1) Invisibility under visible light and (2) Visibility under infrared light were evaluated in the same manner as in Comparative Example 1-1. Fluorescence and washing resistance were each evaluated as follows.

### (3) Fluorescence

The printing layer of a manufactured printed fabric was irradiated with ultraviolet rays, and fluorescence was visually observed. Ultraviolet light was emitted with a UV light having an output of 5 W. The visual observation results were evaluated by the following criteria.
A: if printed characters were dense and clearly visible
B: if printed characters could be identified
C: if printed characters could not be identified

### (4) Washing resistance

In accordance with the washing fastness test of JIS L 0844 No. A-2, the printed fabric was immersed in a washing liquid under the following conditions, then washed with water and dried, and then evaluated according to the above "(2) Visibility under infrared light" and "(3) Fluorescence" by the same criteria.

The above evaluation results are shown in Tables 2-2 to 2-4. The numerical values in the "Pigment concentration in printed portion" and "Fluorescent agent concentration in printed portion" columns shown in Table 2-2 were each determined by calculation from the head resolution, inkjet printing discharge amount, ink specific gravity, and contents of the inorganic infrared-absorbent pigment and fluorescent agent in the ink.

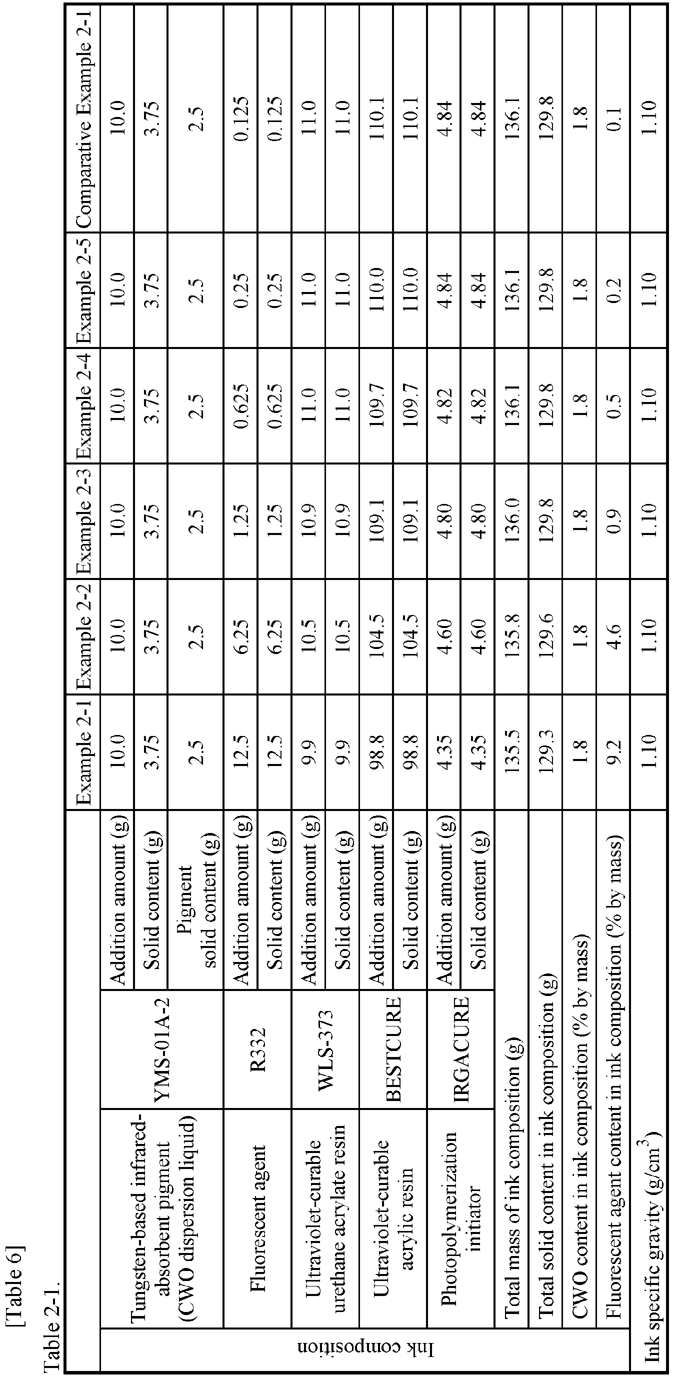

**[Table 7]**

| Table 2-2. | | | | |
|---|---|---|---|---|
| | Infrared-absorbent pigment concentration | | Fluorescent agent concentration | |
| | Pigment concentration in ink (wt%) | Pigment concentration in printed portion (mg/m) | Fluorescent agent concentration in ink (wt%) | Fluorescent agent concentration in printed portion (mg/m²) |
| Example 2-1 | 1.8 | 78.9 | 9.2 | 396.3 |
| Example 2-2 | 1.8 | 78.9 | 4.6 | 197.7 |
| Example 2-3 | 1.8 | 78.9 | 0.9 | 39.5 |
| Example 2-4 | 1.8 | 78.9 | 0.5 | 19.7 |
| Example 2-5 | 1.8 | 78.9 | 0.2 | 7.9 |
| Comparative Example 2-1 | 1.8 | 78.9 | 0.1 | 3.9 |

**[Table 8]**

| Table 2-3. | | | | | | | |
|---|---|---|---|---|---|---|---|
| | Evaluation | | Polyester cloth | Nylon taffeta cloth | Polyester satin cloth | Waffle cloth | High-quality paper (Reference Example) |
| | | | Smoothness 5.3 s | Smoothness 1.0 s | Smoothness 0.7 s | Smoothness 0.1 s | Smoothness 118 s |
| Example 2-1 | Invisibility under visible light | | B | B | B | A | B |
| | Visibility under infrared light | | A | A | A | C | A |
| | Fluorescence | | A | A | A | C | A |
| | Washing resistance | Visibility under infrared light | A | A | A | C | A |
| | | Fluorescence | A | A | A | C | A |
| Example 2-2 | Invisibility under visible light | | B | B | B | A | B |
| | Visibility under infrared light | | A | A | A | C | A |
| | Fluorescence | | A | A | A | C | A |
| | Washing resistance | Visibility under infrared light | A | A | A | C | A |
| | | Fluorescence | A | A | A | C | A |
| Example 2-3 | Invisibility under visible light | | B | B | B | A | B |
| | Visibility under infrared light | | A | A | A | C | A |
| | Fluorescence | | A | A | A | C | A |
| | Washing resistance | Visibility under infrared light | A | A | A | C | A |
| | | Fluorescence | A | A | A | C | A |

**[Table 9]**

| Table 2-4. | | | | | | | |
|---|---|---|---|---|---|---|---|
| | Evaluation | | Polyester cloth | Nylon taffeta cloth | Polyester satin cloth | Waffle cloth | High-quality paper (Reference Example) |
| | | | Smoothness 5.3 s | Smoothness 1.0 s | Smoothness 0.7 s | Smoothness 0.1 s | Smoothness 118 s |
| Example 2-4 | Invisibility under visible light | | B | B | B | A | B |
| | Visibility under infrared light | | A | A | A | C | A |
| | Fluorescence | | A | B | A | C | A |
| | Washing resistance | Visibility under infrared light | A | A | A | C | A |
| | | Fluorescence | A | A | A | C | A |
| Example 2-5 | Invisibility under visible light | | B | B | B | A | B |
| | Visibility under infrared light | | A | A | A | C | A |
| | Fluorescence | | B | B | B | C | A |
| | Washing resistance | Visibility under infrared light | A | A | A | C | A |
| | | Fluorescence | B | B | B | C | B |
| Comparative Example 2-1 | Invisibility under visible light | | B | B | B | A | B |
| | Visibility under infrared light | | A | A | A | C | A |
| | Fluorescence | | C | C | C | C | B |
| | Washing resistance | Visibility under infrared light | A | A | A | C | A |
| | | Fluorescence | C | C | C | C | B |

From the above results, the following was made clear.

In the printed fabric in which the smoothness of the fabric was 0.5 s or more and the concentration of the inorganic infrared-absorbent pigment in the printed portion of the printing layer was 5 mg/m² or more, the printed characters could be identified under infrared irradiation. When the concentration of the inorganic infrared-absorbent pigment in the printed portion was 300 mg/m² or less, the printed characters could not be confirmed or were not perceivable under visible light irradiation, and thus the printed fabric had excellent security.

In the printed fabric in which the smoothness of the fabric was 0.5 s or more and the concentration of the fluorescent agent in the printed portion of the printing layer was 5 mg/m² or more, the printed characters fluoresced under ultraviolet irradiation, and the characters could be identified.

The printed fabrics manufactured in the Examples had excellent washing resistance, and maintained excellent visibility and fluorescence under infrared irradiation even after the washing fastness test.

## Claims

1. A printed fabric for authenticity determination, comprising a fabric and a printing layer on the fabric, wherein
the fabric has a smoothness, as measured by a smoothness testing method set forth in JIS P8155:2010, of 0.5 s or more, and
a printed portion of the printing layer comprises 5 mg/m² or more and 300 mg/m² or less of an inorganic infrared-absorbent pigment per unit area of the printed portion.

2. The printed fabric according to claim 1, wherein the inorganic infrared-absorbent pigment is one or more selected from
a composite tungsten oxide, represented by general formula (1): MₓW_{y}O_{z}, wherein M is one or more elements selected from the group consisting of H, He, alkali metal elements, alkaline earth metal elements, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten; O is oxygen; x, y, and z are each a positive number; 0 < x/y ≤ 1; and 2.2 ≤ z/y ≤ 3.0, and
a tungsten oxide having a Magnéli phase, represented by general formula (2): W_{y}O_{z}, wherein W is tungsten; O is oxygen; y and z are each a positive number; and 2.45 ≤ z/y ≤ 2.999.

3. The printed fabric according to claim 1 or 2, wherein the printed portion further comprises a cured product of an ultraviolet-curable urethane acrylate resin and an ultraviolet-curable acrylic resin comprising no urethane bond.

4. The printed fabric according to any one of claims 1 to 3, wherein the printed portion comprises 5 mg/m² or more and 500 mg/m² of a fluorescent agent per unit area of the printed portion.

5. The printed fabric according to any one of claims 1 to 4, wherein the smoothness of the fabric is 50 s or less.

6. The printed fabric according to any one of claims 1 to 5, wherein the fabric is a fabric forming a portion of a commercial product selected from clothing, accessories, and upholstery, or a fabric forming a tag attached to the commercial product.

7. A method for manufacturing a printed fabric for authenticity determination, comprising printing an ink comprising an inorganic ultraviolet-absorbent pigment on a fabric to form a printing layer on the fabric, wherein
the fabric has a smoothness, as measured by a smoothness testing method set forth in JIS P8155:2010, of 0.5 s or more, and
a printed portion of the printing layer comprises 5 mg/m² or more and 300 mg/m² or less of the inorganic infrared-absorbent pigment per unit area of the printed portion.

8. The method according to claim 7, wherein printing of the ink is carried out by inkjet printing.
